# EUROPÄISCHE PATENTSCHRIFT

(11) **EP 4 016 664 B1**
(45) Veröffentlichungstag und Bekanntmachung des Hinweises auf die Patenterteilung: **19.03.2025**
(21) Anmeldenummer: 20215124.7
(22) Anmeldetag: 17.12.2020
(51) Int. Cl.: H01M 4/04, H01M 4/64, H01M 4/66, H01M 4/08

(54) **VORRICHTUNG UND VERFAHREN ZUM VERDICHTEN VON AUF EINEM KOLLEKTORBAND AUFGEBRACHTEM ELEKTRODENMATERIAL**
DEVICE AND METHOD FOR COMPACTING ELECTRODE MATERIAL APPLIED TO A COLLECTOR BELT
DISPOSITIF ET PROCÉDÉ DE COMPRESSION D'UNE MATIÈRE D'ÉLECTRODE APPLIQUÉ À UNE BANDE COLLECTRICE

(43) Veröffentlichungstag der Anmeldung: 22.06.2022
(73) Patentinhaber: VARTA Microbattery GmbH, 73479 Ellwangen Jagst (DE); Bayerische Motoren Werke Aktiengesellschaft, 80809 München (DE); Breyer GmbH Maschinenfabrik, 78224 Singen Hohentwiel (DE)
(72) Erfinder: BARTHEL, Hubertus, 78269 Volkertshausen (DE); BOLD, Benjamin, 76135 Karlsruhe (DE); DENKMANN, Volker, 47906 Kempen (DE); FLEISCHER, Jürgen, 76228 Karlsruhe (DE); HOLL, Konrad, 73434 Aalen (DE); KORSMEIER, André, 78464 Konstanz (DE); SCHEBESTA, Sebastian, 73479 Ellwangen (DE); TENHAEFF, Katja, 81373 München (DE); WÖHRLE, Thomas, 80637 München (DE)
(74) Vertreter: Ostertag & Partner Patentanwälte mbB

(56) Entgegenhaltungen:
- JP-A- 2013 069 637
- JP-A- 2014 220 113
- JP-A- 2019 537 230
- KR-A- 20180 008 451
- US-A1- 2014 325 833

## Beschreibung

### ANWENDUNGSGEBIET UND STAND DER TECHNIK

Die Erfindung betrifft ein Verfahren sowie eine Verdichtungsvorrichtung zum Verdichten von auf einem Kollektorband aufgebrachtem Elektrodenmaterial. Der Anwendungsbereich ist der Bereich der Batterieherstellung. Die Erfindung betrifft daher insbesondere auch ein Verfahren zur Herstellung einer Batterie unter Nutzung des genannten Verdichtungsverfahrens.

Der Begriff "Batterie" meinte ursprünglich mehrere in Serie geschaltete galvanische Zellen. Heute werden jedoch auch einzelne galvanische Zellen häufig als Batterie bezeichnet. Bei der Entladung einer galvanischen Zelle findet eine energieliefernde chemische Reaktion statt, welche sich aus zwei elektrisch miteinander gekoppelten aber räumlich voneinander getrennten Teilreaktionen zusammensetzt. An der negativen Elektrode werden in einem Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Gleichzeitig kommt es zu einem der Elektrodenreaktion entsprechenden Ionenstrom innerhalb der Zelle. Dieser Ionenstrom wird durch einen ionenleitenden Elektrolyten gewährleistet. In sekundären Zellen und Batterien ist diese Entladereaktion reversibel, es besteht also die Möglichkeit, die bei der Entladung erfolgte Umwandlung chemischer Energie in elektrische umzukehren.

Unter den bekannten sekundären Zellen und Batterien werden vergleichsweise hohe Energiedichten insbesondere von Lithium-Ionen-Batterien erreicht. Lithium-Ionen-Batterien enthalten in vielen Fällen einen Zellenstapel (Stack), der aus mehreren Einzelzellen besteht. Insbesondere Batterien mit sehr hohen Kapazitäten weisen aber meist Wickelzellen (Coils oder Jellyrolls) auf. Diese lassen sich in sehr hoher Geschwindigkeit produzieren und, verbunden damit, auch zu vergleichsweise geringen Kosten.

Wickelzellentechnologie eignet sich sowohl zum Bau von prismatischen Zellen als auch von Rundzellen.

Bei den Zellen einer Lithium-Ionen-Batterie handelt es sich meist um ein Ensemble aus Elektroden- und Separatorfolien mit der Sequenz positive Elektrode/Separator/negative Elektrode. Häufig werden solche Einzelzellen als sogenannte Bi-zellen mit den möglichen Sequenzen negative Elektrode/Separator/positive Elektrode/Separator/negative Elektrode oder positive Elektrode/Separator/negative Elektrode/Separator/positive Elektrode hergestellt. Die Elektroden umfassen dabei üblicherweise metallische Stromkollektoren, die meist in Form von Flächengebilden vorliegen.

In der Regel werden die beschriebenen Zellen für Lithium-Ionen-Batterien in einem mehrstufigen Verfahren produziert. Derartige Verfahren sind beispielsweise aus der DE 102010032770 A1, JP 2013 069637 A, US 2014/325833 A1, JP 2014 220113 A, KR 2018 0008451 A oder aus der US 2010/0081052 A1 bekannt.

Bei den meisten gängigen Verfahren werden in einem ersten Schritt die erwähnten Elektrodenfolien hergestellt und dann anschließend mit einer oder mehreren Separatorfolien zu den erwähnten Elektroden-Separator-Ensembles kombiniert. Meist werden Elektroden und Separatoren in einem Laminationsschritt miteinander verbunden. Sie können jedoch auch in Form eines losen Ensembles weiter gehandhabt werden.

Zur Herstellung der Elektrodenfolien wird ein Elektrodenband hergestellt, welches aus einem elektrisch leitfähigen Kollektorband sowie einem hierauf einseitig oder beidseitig aufgebrachten Elektrodenmaterial besteht. Das Elektrodenmaterial wird üblicherweise in Form einer hochviskosen Masse mittels einer geeigneten Düse und/oder unter Nutzung eines Rakels auf dem Kollektorband aufgebracht, wobei dieses Aufbringen der Elektrodenmasse vorzugweise quasi-kontinuierlich erfolgt, indem das Elektrodenband an einer Aufbringungsstation entlang geführt wird. Üblicherweise bleiben in Förderrichtung erstreckte Randbereich des Kollektorbandes und/oder auch zentrale Teilbereiche frei von Elektrodenmaterial, beispielsweise um diese Bereiche, die im Sinne der vorliegenden Erfindung als Freibereiche bezeichnet werden, später als Kontaktbereiche für Ableiter zu verwenden oder um in den Freibereichen anschließend das Elektrodenband zu schneiden. Nach dem Aufbringen des Elektrodenmaterials schließt sich üblicherweise eine Trocknungsstation an, an der das Trägerlösungsmittel aus der Elektrodenmasse entweicht. Das verbleibende getrocknete Elektrodenmaterial ist üblicherweise von Poren durchsetzt, so dass meist eine Verdichtung zur Erzielung einer höheren Energiedichte folgt. Dies wird auch mit dem Begriff des Kalandrierens beschrieben. Beim Verdichten läuft das Elektrodenband durch einen schmalen Verdichtungsspalt, der üblicherweise durch zwei Verdichterwalzen gebildet wird. Die Kraft, die die Kanten dieses Spaltes, insbesondere die Mantelflächen der Verdichterwalzen, auf das auf dem Kollektorband angeordnete Elektrodenmaterial ausüben, führt zu beabsichtigten Erhöhung der Dichte des Elektrodenmaterials und der erzielbaren Energiedichte der hieraus herstellbaren Batterie.

Die von den Verdichtungsspalt ausgeübte Kraft führt jedoch nicht nur zur Verdichtung des Elektrodenmaterials, sonders es bewirkt auch eine stauchende Verformung des Kollektorbandes, welches durch die Stauchung orthogonal zur Ebene des Kollektorbandes in Förderrichtung und auch quer hierzu gelängt wird.

In den genannten Freibereichen, in denen kein Elektrodenmaterial auf dem Kollektorband aufgebracht ist, findet diese Verformung des Kollektorbandes jedoch nicht statt, da aufgrund des Fehlens der Elektrodenmaterials hier kein Druck vom Verdichtungsspalt auf das Kollektorband ausgeübt wird. Die uneinheitliche Verformung des Kollektorbandes in den beschichteten Bereichen und den Freibereichen kann dazu führen, dass sich das Kollektorband als Ganzes verformt. In randseitigen Freibereichen kann es Verwerfungen und Wellenbildung geben oder solche randseitigen Freibereiche können sich als Ganzes gegenüber benachbarten Bereichen des Kollektorbandes hochbiegen. Dies erschwert die Handhabung des Elektrodenbandes bei anschließenden Verfahrensschritten.

Aus der JP 2014-220113 A ist es bekannt, vor und nach der Verdichtung jeweils eine Vorrichtung zur Dehnung von Freibereichen vorzusehen. Auch aus der DE 102011088824 A1 ist es grundsätzlich schon bekannt, die unbeschichteten Freibereiche von Kollektorbändern durch einen Umformprozess an den beschichteten Bereich anzupassen. Aus der EP 2637238 B1 ist die Verwendung von Wärme zur Behandlung der Freibereiche bekannt.

### AUFGABE UND LÖSUNG

Aufgabe der Erfindung ist es, ein Verfahren zur Verdichtung des Elektrodenmaterials zur Verfügung zu stellen, welches es gestattet, Verformungen des Elektrodenbandes als Ganzes im Zuge dessen zu reduzieren oder vollständig zu verhindern. Das Verfahren ist in Anspruch 1 definiert, eine entsprechende Verdichtungsvorrichtung ist in Anspruch 8 definiert.

Erfindungsgemäß wird hierfür ein Verfahren zum Verdichten von auf einem Kollektorband aufgebrachtem Elektrodenmaterial vorgeschlagen, welches dem Zweck dient, Elektrodenmaterial zu verdichten, welches auf einem Kollektorband aufgetragen ist und mit diesem zusammen ein Elektrodenband als Teilelement einer späteren Batterie bildet, wobei das Elektrodenmaterial zumindest auf einer Seite auf das Kollektorband aufgetragen ist und wobei auf dieser Seite mindestens ein streifenförmiger und in einer Längsrichtung des Kollektorbandes erstreckter Freibereich frei von Elektrodenmaterial ist.

Das Elektrodenband wird in einer zur Längsrichtung des Elektrodenbandes parallelen Förderrichtung durch einen Verdichtungsspalt geführt, der eine Verdichtung des Elektrodenmaterials bewirkt. Wie eingangs bereits erwähnt, ist dieser Verdichtungsspalt vorzugsweise durch zwei Verdichterwalzen begrenzt, die voneinander einen Abstand aufweisen, der geringer als die Dicke des Elektrodenbandes mit aufgebrachtem und gegebenenfalls getrocknetem Elektrodenmaterial ist.

Zum Zwecke der Kompensation der durch den Verdichtungsspalt erzeugten Verformung im Kollektorband wird auch der mindestens eine Freibereich in Längsrichtung kraftbeaufschlagt, um hierdurch im Freibereich eine Dehnung des Kollektorbandes zu bewirken. Dies erfolgt erfindungsgemäß dadurch, dass das Kollektorband in Förderrichtung hinter dem Verdichtungsspalt mittels mindestens einer auf den Freibereich wirkenden Förderrolle kraftbeaufschlagt wird und gleichzeitig in Förderrichtung vor dem Verdichtungsspalt durch eine auf den Freibereich wirkende Bremseinrichtung zurückgehalten wird, so dass das Kollektorband im Freibereich zwischen der Bremseinrichtung und der Fördereinrichtung unter Zugspannung gesetzt wird und hierdurch eine plastische Dehnung in Längsrichtung im Freibereich bewirkt wird.

Während der mit Elektrodenmaterial beschichtete Bereich des Kollektorbandes durch den Verdichtungsspalt, insbesondere die diesen bildenden Verdichterwalzen, verformt wird, wird demnach parallel hierzu eine entsprechende Verformung im mindestens einen Freibereich dadurch erzeugt, dass eine in Förderrichtung wirkende Kraftwirkung erzeugt wird, die hier eine plastische Verformung bewirkt.

Dies erfolgt, indem der Teilabschnitt zwischen der Bremseinrichtung vor dem Verdichtungsspalt und die Fördereinrichtung hinter dem Verdichtungsspalt durch die jeweilige Bremskraft und Förderkraft gedehnt wird. Die Bremseinrichtung und die Fördereinrichtung werden auf die Wirkung der Verdichterwalzen derart angepasst, dass sich in Längsrichtung eine etwa gleiche Längung der Freibereiche und der mit Elektrodenmaterial versehenen Bereiche ergibt. Insbesondere vorzugsweise sind die Bremseinrichtung und die Fördereinrichtung jeweils mit mindestens einer Bremsrolle bzw. Förderrolle versehen, die jeweils selektiv im Freibereich auf das Kollektorband wirken, wobei insbesondere die Förderrolle schneller als die Bremsrolle fördert, so dass hierdurch die gewünschte Spannung zur Erzielung der plastischen Dehnung des Freibereichs bewirkt wird und dauerhaft aufrechterhalten wird.

Die genannte Anpassung der Fördereinrichtung und/oder der Bremseinrichtung kann einmalig bei der Einrichtung des Verfahrens erfolgen oder auch dynamischen und insbesondere automatisierten Anpassungen unterliegen, wie im Weiteren noch erläutert wird.

Die erfindungsgemäß in den Freibereichen bewirkte Spannung kann dabei nicht nur die beschriebene plastische Dehnung derselben bewirken. Es wurde darüber hinaus festgestellt, dass der Spannungszustand dazu führt, dass die durch den Verdichtungsspalt bewirkte Verformung des Kollektorbandes in höherem Maße in Förderrichtung und in geringerem Maße quer hierzu stattfindet. Auch dies begünstigt, dass die plastische Verformung des verdichteten Elektrodenbandes, die einerseits durch den Verdichtungsspalt und andererseits durch die Bremseinrichtung und die Fördereinrichtung bewirkt wird, im gesamten Kollektorband weitgehend einheitlich ist.

Die durch die Bremseinrichtung und die Fördereinrichtung im Freibereich zwischen der Bremseinrichtung und der Fördereinrichtung in Förderrichtung bewirkte Spannung im Kollektorband soll erfindungsgemäß ausreichend hoch sein, um eine plastische Dehnung des Freibereichs in Förderrichtung zu bewirken. Die erzeugte Spannung sollte hierfür für Aluminiumbänder bei mindestens40 MPa liegen. Je nach Material sind jedoch höhere Spannungswerte erforderlich, um die elastische Streckgrenze zu erreichen und somit die gewünschte plastische Verformung zu erzielen.

Die Förderung des Elektrodenbandes als Ganzes kann je nach Art der Fördertechnik einen Spannungszustand in Förderrichtung über die gesamte Breite bewirken, also auch in den mit Elektrodenmaterial beschichteten Bereichen. Dies ist allerdings zu unterscheiden von dem erfindungsgemäß hergestellten Spannungszustand im mindestens einen Freibereich zwischen der Bremseinrichtung und der Fördereinrichtung, dessen Spannung vorzugsweise mindestens um 20% höher liegt als der Spannung in Förderrichtung im mit Elektrodenmaterial beschichteten Bereich des Kollektorbandes.

Die beschriebene Verdichtung dient insbesondere dem Zweck, die Porosität des Elektrodenmaterials zu verringern. Insbesondere wenn dieses in Form einer Lösungsmittel enthaltenden Paste auf dem Kollektorband aufgebracht wurde und durch Trocknen weitgehend von Lösungsmittel befreit wurde, verbleiben die genannten Poren, die mittels der Verdichtung verringert werden. Vorzugsweise wird durch den Verdichtungsspaltdie Porosität des Elektrodenmaterials von mehr als 40% vor dem Verdichtungsspalt zu weniger als 40% hinter dem Verdichtungsspalt verringert. Insbesondere vorzugsweise liegt die Porosität des Elektrodenmaterials vor dem Verdichtungsspalt bei mehr als 50% und nach dem Verdichtungsspalt bei weniger als 30%.

Der Prozess erfolgt vorzugsweise quasi-kontinuierlich mit einer Länge des Elektrodenbandes von wenigstens einigen Metern, vorzugsweise von wenigstens 10 Metern, insbesondere vorzugsweise von wenigstens 100 Metern. Das Elektrodenband wird vorzugsweise mit einer Geschwindigkeit von mehr als 1 m/min und/oder mit einer Geschwindigkeit von weniger als 100 m/min durch den Verdichtungsspalt gefördert, wobei die Geschwindigkeit insbesondere vorzugsweise zwischen 10 m/min und 50 m/min liegt. Die genannten Geschwindigkeiten beziehen sich auf die Zuführung des Elektrodenbandes vor der Verdichtungsvorrichtung.

Zweckmäßig kann es auch sein, wenn das Elektrodenband vor der Bremseinrichtung, an der Bremseinrichtung und/oder zwischen der Bremseinrichtung und der Fördereinrichtung mittels einer Heizeinrichtung zumindest partiell erwärmt wird, um hierdurch die Streckgrenze des Materials des Kollektorbandes abzusenken. Vorzugsweise findet eine Erwärmung auf eine Temperatur zwischen 20° C und 200° C, insbesondere vorzugsweise auf eine Temperatur größer 30° C und/oder eine Temperatur kleiner 120° C statt.

Die Heizeinrichtung kann durch Erwärmung eines externen Heizelements erfolgen, wobei insbesondere ein Teil der Bremseinrichtung und insbesondere eine Bremsrolle der Bremseinrichtung erwärmt werden kann, um hierdurch mittelbar das Kollektorband im Freibereich zu erwärmen. Möglich ist daneben auch das induktive Erwärmen des Kollektorbandes.

Das Kollektorband, welches mittels des erfindungsgemäßen Verfahrens behandelt wird, muss ein elektrisch leitfähiges Band sein, da es im Betrieb der Batterie den Stromfluss zwischen dem Elektrodenmaterial und einem Ableiter ermöglichen soll. Vorzugsweise ist das Kollektorband als metallisches Kollektorband ausgebildet. Wenn das Kollektorband für eine Kathode vorgesehen ist, ist es vorzugsweise aus Aluminium oder einer Aluminiumlegierung gefertigt. In diesem Falle weist es vorzugsweise eine Ausgangsdicke von 8 µm bis 20 µm auf, insbesondere von 8 µm bis 12 µm. Die Dicke von 8 µm bis 12 µm liegt unterhalb der bislang üblichen Dicken bei bekannten Verdichtungsverfahren für Elektrodenbändern mit Freibereich, bei denen größere Dicken Verwendung fanden, um die Neigung des Kollektorbandes zu ungewollten Verformungen zu verringern. Durch das erfindungsgemäße Verfahren können jedoch auch solche geringeren Ausgangsdicken verwendet werden, was die Energiedichte der hiermit erzeugten Batterien erhöht. Ist das Kollektorband für eine Anode vorgesehen, so besteht es vorzugweise aus Kupfer oder Nickel oder einer Kupferlegierung oder einer Nickellegierung. In diesem Falle liegt die Ausgangsdicke vorzugsweise im Bereich von 3 µm bis 12 µm, insbesondere von 3 µm bis 5 µm, was ebenfalls geringer als die bislang üblichen Dicken ist.

Das auf dem Kollektorband vorgesehene Elektrodenmaterial liegt vorzugweise in Form einer Schicht mit elektrochemisch aktiven Partikeln vor, wobei insbesondere vorzugsweise zusätzlich mindestens einen Elektrodenbinder und/oder ein leitfähiger Zusatz, insbesondere Ruß, Graphit, Carbon-Nanotubes oder andere leitfähige Kohlenstoffmaterialien, Teil des Elektrodenmaterials ist. Bei Aufbringung ist üblicherweise noch Lösungsmittel enthalten, welches nach einer vorzugsweise der Verdichtung vorgeschalteten Trocknung jedoch zum überwiegenden Teil entwichen ist.

Die Breite des Kollektorbandes hängt wesentlich von der Art der nachfolgenden Verwendung ab. Grundsätzlich sind Breiten im Bereich von 50 mm und 2400 mm zweckmäßig. Geringe Breiten im Bereich von 50 mm können zweckmäßig sein, wenn das Kollektorband ohne einen nachfolgenden Trennvorgang in Längsrichtung unmittelbar für einen Wickel einer Batterie verwendet wird. Größere Breiten finden insbesondere dann Verwendung, wenn entweder nach der Verdichtung eine Mehrzahl von Streifen durch Schnitte in Längsrichtung gebildet werden sollen oder wenn durch einen Schneidvorgang Abschnitte herausgeschnitten werden sollen, insbesondere zur Bildung eines Elektrodenstapels.

Das beschriebene Verfahren ist vorzugsweise Teil eines Verfahrens zur Herstellung einer Batterie. Bei diesem Batterieherstellungsverfahren ist vorgesehen, dass zunächst ein Elektrodenband hergestellt wird, indem auf ein Kollektorband einseitig oder beidseitig Elektrodenmaterial aufgebracht wird.

Nachdem das Elektrodenmaterial in Form einer hochviskosen Paste aufgetragen wird, insbesondere durch eine Schlitzdüse, kann ein Trocknungsschritt folgen, im Rahmen dessen das Elektrodenband vorzugsweise kontinuierlich durch eine Trocknungsanlage hindurch gefördert wird, in der durch Wärme Lösungsmittel aus der Paste entfernt wird, so dass eine weitgehend trockene Schicht verbleibt.

Anschließend erfolgt die Verdichtung des Elektrodenmaterials mit dem oben beschriebenen Verfahren.

Das Elektrodenband mit dem trockenen und verdichteten Elektrodenmaterial wird anschließend in die für eine Batterie erforderliche Form gebracht, beispielsweise durch Aufwickeln oder Stapeln, gegebenenfalls nach einem zuvor erfolgten Schneidprozess.

In dieser Form wird es dann in ein Batteriegehäuse eingefügt, wobei das Kollektorband bzw. ein hieraus ausgeschnittenen Teilabschnitt galvanisch mit mindestens einem außenliegenden Ableiterbereich des Batteriegehäuses verbunden wird. Die galvanische Verbindung kann dabei insbesondere in einem Bereich des Kollektorbandes erfolgen, der bei dem zuvor beschriebenen Verfahren einen der Freibereiche bildete.

Die Erfindung umfasst auch eine Verdichtungsvorrichtung zum Verdichten von auf einem Kollektorband aufgebrachtem Elektrodenmaterial, insbesondere mittels des vorgenannten Verfahrens. Merkmale, die in Hinblick auf das Verfahren beschrieben sind und die strukturelle Elemente der Verdichtungsvorrichtung betreffen, sind dementsprechend vorzugsweise bei der erfindungsgemäßen Verdichtungsvorrichtung ebenfalls vorgesehen. Ebenso findet bei dem beschriebenen erfindungsgemäßen Verfahren vorzugsweise eine Vorrichtung Verwendung, die entsprechend der nachfolgend beschriebenen Merkmale ausgebildet ist oder zumindest einige dieser Merkmale aufweist.

Entsprechend dem beschriebenen Verfahren dient die erfindungsgemäße Verdichtungsvorrichtung dem Zweck, Elektrodenmaterial zu verdichten, welches auf einem Kollektorband aufgetragen ist und mit diesem zusammen ein Elektrodenband bildet, wobei das Elektrodenmaterial zumindest auf einer Seite auf das Kollektorband aufgetragen ist und wobei auf dieser Seite mindestens ein streifenförmiger und in einer Längsrichtung erstreckter Freibereich frei von Elektrodenmaterial ist.

Die Verdichtungsvorrichtung verfügt über eine Förderstrecke zur Förderung des Elektrodenbandes in Richtung einer zur Längsrichtung des Elektrodenbandes parallelen Förderrichtung. Die Fördereinrichtung kann den Transport des Bandes über Rollen vorsehen, gegebenenfalls über angetriebene Rollen. Auch denkbar ist es, dass der Antrieb mittels eines Wickelautomaten erfolgt, der hinter der Verdichtungsvorrichtung vorgesehen ist.

Die erfindungsgemäße Verdichtungsvorrichtung verfügt über einen Verdichtungsspalt, durch den hindurch die Förderstrecke verläuft und der zumindest auf mindestens einer Seite von einerVerdichterwalze begrenzt ist, vorzugsweise beidseitig von jeweils einer Verdichterwalze. Dieser Verdichtungsspalt dient der Verdichtung des Elektrodenmaterials des durch den Verdichtungsspalt hindurch laufenden Elektrodenbandes. Ihr Abstand ist vorzugsweise einstellbar, um Elektrodenbänder unterschiedlichen Typs hiermit verdichten zu können.

Erfindungsgemäß ist vorgesehen, dass die Verdichtungsvorrichtung in Förderrichtung vor dem Verdichtungsspalt über eine Bremseinrichtung verfügt und in Förderrichtung hinter dem Verdichtungsspalt über eine Fördereinrichtung verfügt. Dabei weist die Fördereinrichtung mindestens eine Förderrolle zum Antreiben des Elektrodenbandes im mindestens einen Freibereich auf. Die Bremseinrichtung ist dafür ausgebildet, eine Bremskraft auf den Freibereich wirken zu lassen, so dass die Fördereinrichtung und die Bremseinrichtung gemeinsam in der Lage sind, eine plastische Dehnung in Längsrichtung selektiv im Freibereich zwischen ihnen zu erzeugen.

Die Fördereinrichtung ist erfindungsgemäß mit einer Förderrolle zur Bewirkung einer in Förderrichtung wirkenden Kraft und eines Spannungszustandes im Freibereich zu erzielen. Die Bremseinrichtung, die durch das Zurückhalten des Kollektorbandes den Aufbau des Spannungszustandes gestattet, braucht keine korrespondierende Rolle aufzuweisen. Stattdessen könnte die Bremseinrichtung beispielsweise auch beidseitig des Kollektorbandes über Bremsschuhe, insbesondere mit einer haftreibungsverhindernden Oberfläche, wie bspw. einer Filzoberfläche, aufweisen.

Es wird jedoch in der Praxis als beste Bauform angesehen, wenn auch die Bremseinrichtung über mindestens eine Bremsrolle verfügt. Diese mindestens eine Bremsrolle ist dafür ausgebildet, durch Rückhalten des Kollektorbandes im mindestens einen Freibereich den Aufbau der Spannung in Förderrichtung zu gestatten. Im einfachsten Falle ist der mindestens einen Bremsrolle eine elektrische oder mechanische Bremse zugeordnet. Eine mechanische Bremse kann dabei so gestaltet sein, wie es von Fahrzeugen bekannt ist, also insbesondere in Form einer Backenbremse, Trommelbremse oder Scheibenbremse, wobei die Ansteuerung der Bremse üblicherweise mittels eines elektrischen Aktors erfolgt. Eine elektrische Bremse kann insbesondere in Form einer Wirbelstrombremse oder einer Magnetbremse ausgebildet sein.

Alternativ zu einer Bremse dieser Art, kann die mindestens eine Bremsrolle auch mit einem Antriebsmotor versehen sein, sofern dieser in der Lage ist, der durch die Fördereinrichtung bewirkten Zugkraft im Kollektorband im mindestens einen Freibereich zu widerstehen. Hierfür kommen insbesondere Stellmotoren bzw. Synchronmotoren in Frage.

Vorzugsweise verfügt die Bremseinrichtung über mindestens zwei Bremsrollen, die oberhalb und unterhalb des Freibereichs angeordnet sind und die gegeneinander gerichtet auf den Freibereich des Elektrodenbandes drücken. Das Elektrodenband wird somit zwischen zwei solchen Bremsrollen geführt. Dabei kann vorgesehen sein, dass mindestens eine dieser beiden Rollen mit einer Bremse versehen ist und die andere lediglich passiv mitbremst. Denkbar ist auch, dass beide Bremsrollen mit Bremsen versehen sind, insbesondere indem die beiden Bremsrollen mittels separater Antriebsmotoren angetrieben sind, wobei die Antriebsmotoren in oben beschriebener Art ermöglichen, dass eine Zugspannung im Freibereich erzeugt wird.

Vorzugsweise ist die Bremseinrichtung derart ausgebildet, dass sie über mindestens zwei Bremsrollen oberhalb oder unterhalb des Elektrodenbandes verfügt, die entsprechend zweier unterschiedlicher und zueinander paralleler Freibereiche des Elektrodenbandes positioniert sind. Sind mehr als zwei Freibereiche vorgesehen, so sind vorzugsweise an der Oberseite und/oder an der Unterseite jeweils so viele Bremsrollen vorgesehen wie Freibereiche auf dem Elektrodenband.

Diese den verschiedenen Freibereichen zugeordneten Bremsrollen oberhalb oder unterhalb des Elektrodenbandes können zueinander koaxial drehbar angeordnet sein. Dies kann es erleichtern, die Bremsrollen mittels eines gemeinsamen Antriebsmotors anzutreiben, aber auch bei nicht koaxial angeordneten Bremsrollen können diese mittels eines Getriebes mit der Abtriebswelle eines gemeinsamen Elektromotors verbunden sein. Weiterhin ist jedoch auch eine Gestaltung möglich, bei der mehrere Bremsrollen auf der gleichen Seite des Elektrodenbandes mit mehreren Antriebsmotoren angetrieben werden. Dies gestattet es, für die verschiedenen Freibereiche in unterschiedlichem Maße eine Bremswirkung zu entfalten und somit individuell für jeden Freibereich die jeweils optimale Bremswirkung zu bewirken.

Was die Frage der Anordnung der Förderrollen angeht, die in Förderrichtung hinter dem Verdichtungsspalt angeordnet sind, so gilt ähnliches wie für die Bremsrollen. Auch die Fördereinrichtung kann über mindestens zwei Förderrollen verfügen, die oberhalb und unterhalb des Freibereichs angeordnet sind und die gegeneinander gerichtet auf den Freibereich des Elektrodenbandes drücken, so dass der Freibereich zwischen den beiden Förderrollen geführt und angetrieben ist. Dabei kann ebenso wie bei den Bremsrollen vorgesehen sein, dass ein gemeinsamer Antriebsmotor beide Förderrollen antreibt oder jeweils ein Antriebsmotor hierfür vorgesehen ist. Möglich ist auch, dass nur eine der Förderrollen angetrieben ist, während ihre Gegenrolle passiv mitrollt. Weiterhin ist auch bei den Förderrollen vorgesehen, dass im Falle von mehr als einem Freibereich auf einer Seite des Elektrodenbandes die Fördereinrichtung über mindestens zwei Förderrollen oberhalb oder unterhalb des Elektrodenbandes verfügt, die entsprechend der jeweiligen Freibereiche des Elektrodenbandes positioniert sind und vorzugsweise koaxial angeordnet sind. Die Förderrollen können durch einen gemeinsamen Antriebsmotor angetrieben sein oder über separate Antriebsmotoren verfügen, um eine individuelle Antriebskraft und daraus resultierend eine individuelle Zugspannung für jeden Freibereich zu erzeugen.

Die Förderrollen sowie Bremsrollen selbst können aus verschiedenen Materialien gefertigt sein. Insbesondere relevant ist, dass sie geeignet sind, einen schlupffreien oder schlupfarmen Kontakt zum Freibereich des Elektrodenbandes zu bewirken, so dass die Bremswirkung bzw. Antriebswirkung genau dosiert bewirkt wird. Insbesondere können die Rollen eine in Kontakt mit dem Elektrodenband gelangende Außenseite aufweisen, die aus einem metallischen Werkstoff, aus Kunststoff, aus einem Keramikmaterial oder einem Elastomermaterial besteht oder aus einem Verbundmaterial aus einem metallischen Werkstoff, aus Kunststoff, aus einem Keramikmaterial oder einem Elastomermaterial besteht.

Um die Streckgrenze im Freibereich absenken zu können, ist vorzugsweise eine Heizeinrichtung vorgesehen, die an der Bremseinrichtung, vor der Bremseinrichtung oder zwischen der Bremseinrichtung und der Fördereinrichtung angeordnet ist und die geeignet ist, das Elektrodenband zumindest in einem Freibereich zu erwärmen. Es kann sich um eine Widerstandsheizeinrichtung handeln, die das Elektrodenband mittelbar erwärmt, wobei insbesondere auch möglich ist, die Heizeinrichtung derart anzuordnen, dass sie einen Teil der Bremseinrichtung und insbesondere eine Bremsrolle der Bremseinrichtung erwärmt, so dass hierdurch mittelbar das Kollektorband im Freibereich erwärmt wird. Eine andere Möglichkeit besteht jedoch darin, eine induktiv wirkende Heizeinrichtung zu verwenden, die unmittelbar induktiv eine Erwärmung des Kollektorbandes bewirkt.

Die erfindungsgemäße Gestaltung mit Fördereinrichtung und Bremseinrichtung gestattet es, durch gezielte Konfiguration der jeweiligen Fördergeschwindigkeit bzw. der Fördergeschwindigkeit der Fördereinrichtung und der Bremswirkung der Bremseinrichtung die Spannung und hieraus resultierend die Dehnung in einem Freibereich oder mehreren Freibereichen präzise einzustellen und an die längende Wirkung des Verdichtungsspaltes auf den beschichteten Bereich des Kollektorbandes anzupassen.

Diese Einstellung kann manuell und einmalig für ein oder mehrere Elektrodenbänder erfolgen. Es kann jedoch auch eine Konfiguration der Verdichtungsvorrichtung vorgesehen sein, die eine automatische oder halbautomatische Anpassung erlaubt, insbesondere auch eine Regelung, die während des Betriebes die jeweiligen Parameter fallweise anpasst. Insbesondere hierfür wird eine Ausgestaltung als besonders vorteilhaft angesehen, bei der die Verdichtungsvorrichtung eine Erfassungs- und Steuereinrichtung aufweist, die dafür ausgebildet ist, die Formgebung des Elektrodenbandes zu erfassen und in Reaktion auf die erfasste Formgebung die Fördereinrichtung und/oder die Bremseinrichtung und/oder die Heizeinrichtung zu steuern.

Eine solche Steuereinrichtung weist Ausgänge auf, die mit den Antriebsmotoren der Antriebs- und/oder den Antriebsmotoren oder Bremsen der Bremseinrichtung verbunden sind und so deren jeweilige Betriebsparameter, insbesondere die Antriebsgeschwindigkeit bzw. die Bremswirkung, steuern können. Eine solche Steuereinrichtung kann auch ohne eine zusätzliche Erfassungseinrichtung vorgesehen sein, um wechselnde Parametersätze für den Betrieb verwenden zu können. Besonders vorteilhaft ist jedoch die Kombination mit einer Erfassungsvorrichtung, die das Elektrodenband jenseits der Antriebseinrichtung oder zwischen Antriebseinrichtung und Bremseinrichtung untersucht und in Abhängigkeit dessen mittels der Steuereinrichtung Verfahrensparameter ändert, insbesondere das Antriebsmoment oder die Antriebsgeschwindigkeit der antreibenden Motoren. Als besonders vorteilhaft wird es angesehen, wenn die Erfassungseinrichtung mindestens eine Kamera aufweist, die die Formgebung des Elektrodenbandes untersucht. Die Auswertung des Kamerabildes kann dabei über Mustererkennung erfolgen, wobei im einfachsten Falle die Neigung des Kollektorbandes, dass randseitige Freibereiche sich hochbiegen, als Indiz für eine zu geringe Längung interpretiert wird und die Neigung der Wellenbildung in den randseitigen Freibereichen als Indiz einer zur großen Längung interpretiert wird. Entsprechend kann die Brems- und/oder Förderwirkung der Antriebseinrichtung und der Bremseinrichtung angepasst werden, um eine höhere bzw. geringere Streckung der Freibereiche zu erzielen. Statt der Auswertung eines Kamerabildes kann ähnliches auch durch eine Erfassungseinrichtung bewirkt werden, die eine Abstandsmessung zu den Freibereichen durchführt, beispielsweise mittels eines Laserstrahls, und ggf. mittels der Steuereinrichtung aus den Ergebnissen dieser Abstandsmessung die Formgebung der Freibereiche hinter der Fördereinrichtung bewertet.

Im Betrieb befindet sich bestimmungsgemäß ein Elektrodenband in der Verdichtungsvorrichtung, welches entsprechend der obigen Beschreibung ausgebildet ist.

Die Verdichtungsvorrichtung ist vorzugsweise derart ausgebildet, dasssie an unterschiedliche Elektrodenbänder und insbesondere an unterschiedliche Anordnungen von Freibereichen anpassbar ist.

Hierfür ist es von Vorteil, wenn die Förderrollen und/oder die Bremsrollen bezogen auf eine zur Förderrichtung orthogonale Querrichtung gegenüber dem Verdichtungsspalt verlagerbar sind und in definierten Positionen bezogen auf die Querrichtung festgelegt werden können. Auch kann es sinnvoll sein, wenn Förderrollen und/oder Bremsrollen vorgesehen sind, die fallweise anbringbar sind, um eine Anpassung der der Verdichtungsvorrichtung auf unterschiedliche Konfigurationen von Freibereichen des Elektrodenbandes zu ermöglichen.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 verdeutlicht die der Erfindung zugrunde liegende Problematik, die Verformung des Kollektorbandes bei der Verdichtung des Elektrodenmaterials eines Elektrodenbandes.
Fig. 2A und 2B deutlichen die Wirkung der Verdichtung auf das Kollektorband.
Fig. 3 zeigt eine erfindungsgemäße Verdichtungsvorrichtung in Gesamtdarstellung.
Fig. 4A bis 4D zeigen verschiedene Konfigurationen von Bremsrollen einer erfindungsgemäßen Verdichtungsvorrichtung.

### DETAILLIERTE BESCHREIBUNG DER AUSFÜHRUNGSBEISPIELE

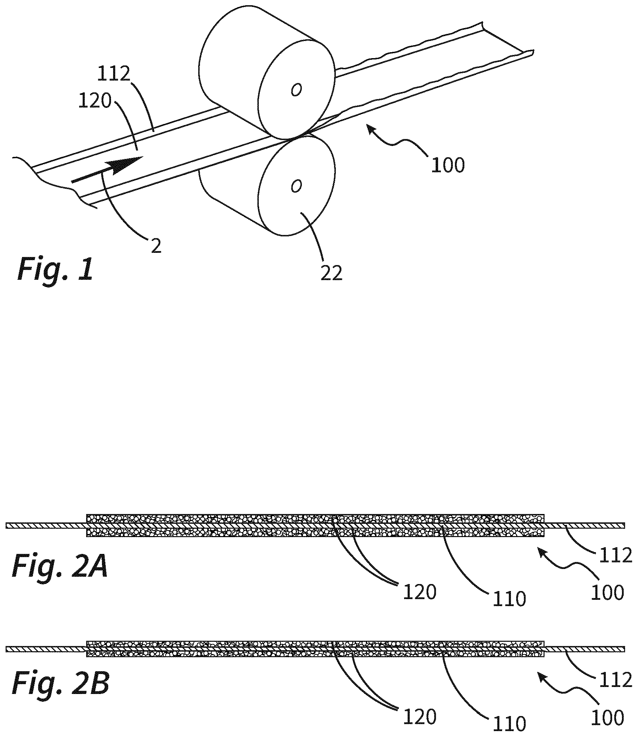

Fig. 1 sowie 2A und 2B zeigen die der Erfindung zugrunde liegende Grundproblematik.

Ein Elektrodenband 100 umfasst ein metallisches Kollektorband 110, auf dem beidseitig Elektrodenmaterial aufgebracht ist, welches jeweils einen mittigen Streifen auf der Oberseite und Unterseite bildet. Beidseitig dessen sind die randseitige Freibereiche 112 des Kollektorbandes 110 frei von Elektrodenmaterial. Zur Erzielung einer hohen Energiedichte einer Batterie wird im Rahmen eines kontinuierlichen Prozesses das Elektrodenband 100 in Richtung des Pfeils 2 transportiert und hierbei durch einen Verdichtungsspalt 20 geführt, der durch zwei Verdichterwalzen 22 gebildet wird. Es kommt hierbei zu einer Komprimierung des Elektrodenmaterials 120, wie sie aus dem Vergleich der Fig. 2A und 2B ersichtlich ist.

Dabei ist es kaum vermeidbar, dass die Verdichtung nicht nur das Elektrodenmaterial 120 betrifft, sondern darüber hinaus auch zu einer Komprimierung des Kollektorbandes 110 quer zu seiner Erstreckungsrichtung führt. Das Kollektorband 110 wird daher in seiner Haupterstreckungsebene in Förderrichtung 2 und quer hierzu plastisch verformt. Eine Verformung der Freibereiche 112 findet jedoch nicht statt, da die Verdichterwalzen 22 auf die Freibereiche 112 keine Kraft ausüben. Fig 2B verdeutlicht die Komprimierung des Kollektorbandes 110 im Bereich des Elektrodenmaterials 120.

Ergebnis ist die in Fig. 1 rechts der Verdichterwalzen 22 exemplarisch dargestellte Verformung der Freibereiche 112. Diese erschwert die Weiterverarbeitung des Kollektorbandes, beispielsweise das Anschweißen von Ableiterverbindungen im Freibereich 112.

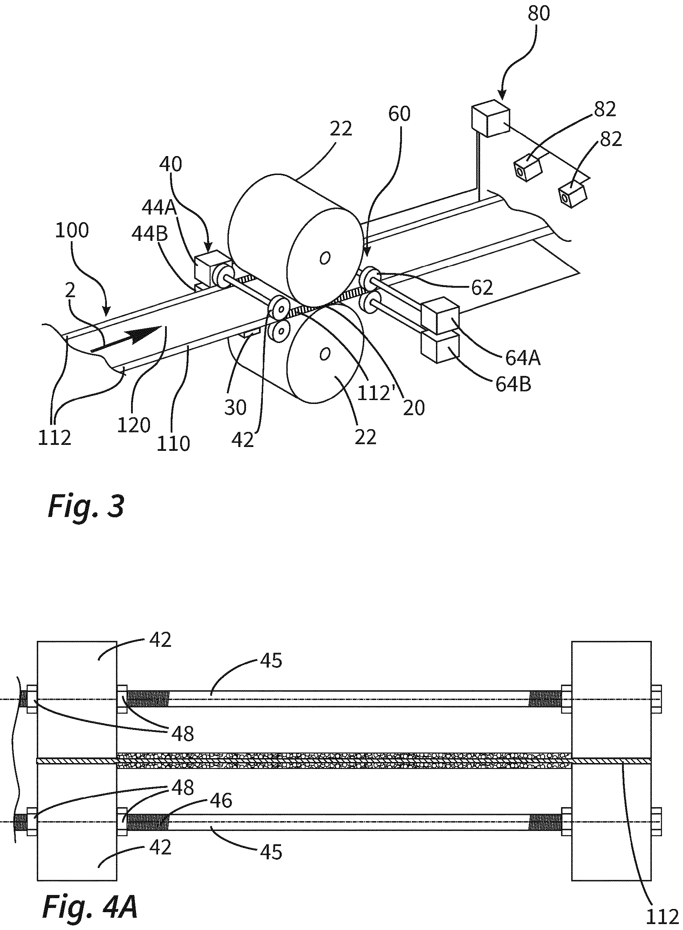

Der Fig. 3 ist eine erfindungsgemäße Verdichtungsvorrichtung zu entnehmen. Bei dieser ist dem Verdichtungsspalt 20 vorgeschalteteine Bremseinrichtung40 vorgesehen und den Verdichterwalzen 22 nachgeschaltet eine Fördereinrichtung 60 vorgesehen. Die Bremseinrichtung und die Fördereinrichtung verfügen jeweils über vier Bremsrollen 42 bzw. Förderrollen 62, wobei jeweils eine Förderrolle 62 oberhalb und eine Förderrolle 62 unterhalb des Kollektorbandes 110 in jeweils beiden randseitigen Freibereichen 112 vorgesehen ist. Gleiches gilt für die Bremsrollen 42.

Die Förderrollen 62 sowie die Bremsrollen 42 sind jeweils mit Antriebsmotoren angetrieben, wobei beim vorliegenden Ausführungsbeispiel jeweils ein Antriebsmotor 64A, 64B für die Förderrollen oberhalb bzw. unterhalb des Elektrodenbandes 100 vorgesehen ist. Gleichermaßen sind auch den Bremsrollen 42 zwei Antriebsmotoren 44A, 44B zugeordnet, wobei wiederum einer der Antriebsmotoren der Bremsrollen 42 oberhalb des Elektrodenbandes und ein Antriebsmotor der Bremsrollen 42 unterhalb des Elektrodenbandes angeordnet ist.

Die Förderrollen 62 und die Bremsrollen 42 werden mit geringfügig unterschiedlicher Geschwindigkeit angetrieben. So kann beispielsweise die Geschwindigkeit der Förderrollen 62 0,5% über jener der Bremsrollen 42 liegen. Die Geschwindigkeit der Förderrollen ist dabei angepasst an die Längung des Kollektorbandes im durch Elektrodenmaterial 120 beschichteten Bereich.

Die Kombination der Bremswirkung der langsamer betriebenen Bremsrollen 42 und der Förderwirkung der schneller betriebenen Förderrollen 62 bewirkt, dass ein Abschnitt 112' des Freibereichs 112 zwischen der Bremseinrichtung 40 und der Fördereinrichtung 60 mechanisch gespannt wird. Dabei wird durch passende Anpassung der jeweiligen Geschwindigkeiten bzw. der jeweiligen Fördermomente und Bremsmomente ein Spannungszustand in den Freibereichen 112 erzielt, der im schraffiert hervorgehobenen Abschnitt 112' zu einer plastischen Dehnung in Förderrichtung 2 führt.

Beim vorliegenden Ausführungsbeispiel ist zusätzlich vorgesehen, dass zwei Kameras 82 auf das Elektrodenband 100 gerichtet sind, wobei hierdurch die beiden Freibereiche 112 hinter der Verdichtungsvorrichtung erfasst werden. Eine Steuereinrichtung 80 wertet die erfassten Bilder aus und steuert in Abhängigkeit des Ergebnisses die Antriebsmotoren 44A, 44B, 64A, 64B. Die Steuereinrichtung 80 ist zu diesem Zweck derart ausgebildet, dass sie die in den Freibereichen 112 auftretenden Effekte durch eine zu große oder zu geringe Dehnung der Freibereiche 112 erkennen kann. Eine zu geringe Dehnung äußert sich üblicherweise darin, dass die Freibereiche 112 sich in etwa orthogonal zum Elektrodenmaterial 120 aufstellen. Eine zu große Dehnung der Freibereiche führt zu einer Wellenbildung der Ränder des Kollektorbandes 110. Wird ein solcher Effekt festgestellt, so werden die Fördermomente an den Förderrollen 62 und/oder die Bremsmomente an den Bremsrollen 42 entsprechend angepasst.

Bei einer nicht dargestellten Variante sind unterschiedliche Antriebsmotoren für die jeweils linken und die jeweils rechten Förderrollen bzw. Bremsrollen vorgesehen. Dies gestattet es, auch asymmetrisch auftretende Fehler in den randseitigen Freibereichen 112 angepasst zu korrigieren.

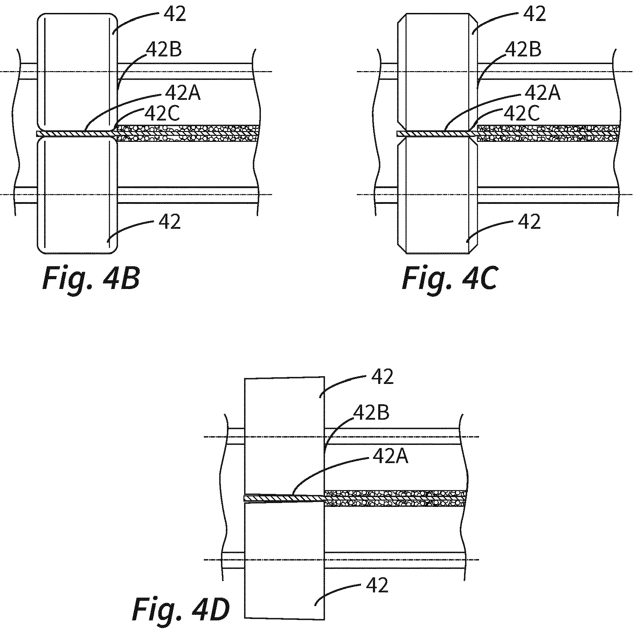

Fig. 4A zeigt in partiell geschnittener Darstellung die Anordnung von Bremsrollen 42, die in den Freibereichen 112 von oben und unten auf das Kollektorband 110 drücken und hierdurch in der Lage sind, gezielt nur so viel des Elektrodenbandes 100 freizugeben, dass der gewünschte Spannungszustand im Abschnitt 112' eintritt. Der Fig. 4A ist weiterhin in vereinfachter Darstellung zu entnehmen, dass die Bremsrollen 42 ebenso wie auch die Förderrollen 62 vorzugsweise bezüglich ihrer Position auf ihrer jeweiligen Antriebswelle 45 einstellbar sind. Bei der sehr einfachen Gestaltung gemäß Fig. 4A ist hierfür vorgesehen, dass die Antriebswellen 45 mit einem Gewinde 46 versehen sind und die Bremsrollen 42 durch Muttern 48 an variabler Stelle der Antriebswellen 45 befestigt werden können. Auf diese Art und Weise kann die Verdichtungsvorrichtung an unterschiedliche Konfigurationen von Elektrodenbändern angepasst werden.

Die Fig. 4B und 4C verdeutlichen etwas angepasste Bauweisen, bei denen die Bremsrollen 42 im Übergangsbereich zwischen ihren Stirnflächen 42B und ihren Mantelflächen 42A mit Rundungen 42C oder Fasen versehen sind. Es hat sich herausgestellt, dass die Verwendung solcher Bremsrollen 42 von Vorteil ist, da hierdurch das Elektrodenmaterial 120 randseitig beeinflusst werden kann, um eine möglichst einheitliche Verteilung auf dem Kollektorband zu bewirken und hierdurch auch eine weitgehend einheitliche Wirkung des Verdichtungsspaltes 20 auf die Verformung des Kollektorbandes 110 hervorzurufen.

Bei der Gestaltung gemäß 4D ist vorgesehen, dass eine Mantelfläche 42A der Bremsrollen 42 nicht vollständig zylindrisch ist, sondern eine leichte Kegelform aufweist, wobei abweichend von der zur Verdeutlichung etwas übertrieben dargestellten Gestaltung der Fig. 4C trotz der kegelabschnittsförmigen Mantelfläche 42A diese vollständig am Freibereich 112 des Kollektorbandes 110 anliegt. Es wurde festgestellt, dass diese Kegelform begünstigt, dass die durch den Verdichtungsspalt bewirkte Verformung des Kollektorbandes 110 in einem höheren Maße in Förderrichtung 2 und nicht quer hierzu erfolgt.

## Patentansprüche

1. Verfahren zum Verdichten von auf einem Kollektorband (110) aufgebrachtem Elektrodenmaterial (120) mit den folgenden Merkmalen:
a. das Verfahren dient dem Zweck, Elektrodenmaterial (120) zu verdichten, welches auf einem Kollektorband (110) aufgetragen ist und mit diesem zusammen ein Elektrodenband (100) bildet, wobei das Elektrodenmaterial (120) zumindest auf einer Seite auf das Kollektorband aufgetragen ist und wobei auf dieser Seite mindestens ein streifenförmiger und in einer Längsrichtung des Kollektorbandes erstreckter Freibereich (112) frei von Elektrodenmaterial (120) ist, und
b. das Elektrodenband wird in einer zur Längsrichtung des Elektrodenbandes parallelen Förderrichtung (2) durch einen Verdichtungsspalt (20) geführt, der eine Verdichtung des Elektrodenmaterials (120) bewirkt, und
c. der mindestens eine Freibereich (112) wird in Längsrichtung kraftbeaufschlagt, um hierdurch im Freibereich eine Dehnung des Kollektorbandes zu bewirken,
**gekennzeichnet durch** das folgende Merkmal:
d. die Dehnung des Kollektorbandes (110) im mindestens einen Freibereich (112) in Längsrichtung erfolgt **dadurch, dass** das Kollektorband in Förderrichtung (2) hinter dem Verdichtungsspalt (20) mittels mindestens einer selektiv auf den Freibereich wirkenden Förderrolle (62) kraftbeaufschlagt wird und gleichzeitig in Förderrichtung vor dem Verdichtungsspalt (20) durch mindestens eine selektiv auf den Freibereich (112) wirkende Bremsrolle (42) einer Bremseinrichtung (40) zurückgehalten wird, so dass das Kollektorband (110) im Freibereich (112) zwischen der Bremseinrichtung (40) und der Fördereinrichtung (50) unter Zugspannung gesetzt wird und hierdurch eine plastische Dehnung in Längsrichtung im Freibereich (112) bewirkt wird.

2. Verfahren nach Anspruch 1 mit dem folgenden zusätzlichen Merkmal:
a. die durch die Bremseinrichtung und die Fördereinrichtung im Freibereich zwischen der Bremseinrichtung (40) und der Fördereinrichtung (50) in Förderrichtung (2) bewirkte Spannung im Kollektorband (110) liegt bei mindestens 40 MPa,
vorzugsweise mit dem zusätzlichen Merkmal:
b. die durch die Bremseinrichtung und die Fördereinrichtung im Freibereich zwischen der Bremseinrichtung (40) und der Fördereinrichtung (50) in Förderrichtung (2) bewirkte Spannung im Kollektorband (110) liegt mindestens um 20% höher als der Spannungszustand in Förderrichtung (2) im mit Elektrodenmaterial beschichteten Bereich des Kollektorbandes (110).

3. Verfahren nach Anspruch 1 oder 2 mit mindestens einem der folgenden zusätzlichen Merkmale:
a. durch den Verdichtungsspalt (20) wird die Porosität des Elektrodenmaterials (120) verringert, vorzugsweise von mehr als 40% vor dem Verdichtungsspalt (20) zu weniger als 40% hinter dem Verdichtungsspalt (20), und/oder
b. das Elektrodenband (100) wird mit einer Geschwindigkeit von mehr als 1 m/min und/oder mit einer Geschwindigkeit von weniger als 100 m/min durch den Verdichtungsspalt (20) gefördert, vorzugsweise mit einer Geschwindigkeit zwischen 10 m/min und 50 m/min.

4. Verfahren nach einem der Ansprüche 1 bis 3 mit dem folgenden zusätzlichen Merkmal:
a. das Elektrodenband (100) wird vor der Bremseinrichtung (40) und/oder zwischen der Bremseinrichtung (40) und der Fördereinrichtung (50) mittels einer Heizeinrichtung (30) zumindest partiell erwärmt, vorzugsweise auf eine Temperatur zwischen 20° C und 200° C, insbesondere vorzugsweise auf eine Temperatur größer 30° C und/oder eine Temperatur kleiner 120° C,
vorzugsweise mit dem folgenden zusätzlichen Merkmal:
b. die Heizeinrichtung ist dafür ausgebildet, ein Teil der Bremseinrichtung und insbesondere eine Bremsrolle der Bremseinrichtung zu erwärmen, so dass hierdurch mittelbar das Kollektorband (110) im Freibereich (112) erwärmt wird.

5. Verfahren nach einem der Ansprüche 1 bis 4 mit mindestens einem der folgenden zusätzlichen Merkmale:
a. das Kollektorband (110) ist als metallisches Kollektorband (110) ausgebildet, und/oder
b. das Elektrodenmaterial (120) liegt in Form einer Schicht mit elektrochemisch aktiven Partikeln vor, die vorzugsweise zusätzlich mindestens einen Elektrodenbinder und/oder einen leitfähigen Zusatz, insbesondere Ruß, Graphit oder Carbon-Nanotubes, aufweist, und/oder
c. der mindestens eine Freibereich (112) bildet einen randseitigen Freibereich (112) an einer der seitlichen Kanten des Kollektorbandes (110), wobei vorzugsweise an beiden seitlichen Kanten des Kollektorbandes (110) ein randseitiger Freibereich (112) vorgesehen ist, und/oder
d. das Kollektorband (110) ist als Kollektorband aus Aluminium oder einer Aluminiumlegierung ausgebildet und weist vorzugsweise eine Ausgangsdicke von 8 µm bis 12 µm auf, oder
e. das Kollektorband (110) ist als Kollektorband aus Kupfer oder Nickel oder einer Kupferlegierung oder einer Nickellegierung ausgebildet und weist vorzugsweise eine Ausgangsdicke von 3 µm bis 5 µm auf, oder
f. das Kollektorband (110) weist eine Breite zwischen 50 mm und 2400 mm auf, und/oder
g. der mindestens eine Freibereich (112) weist eine Breite in Querrichtung von mindestens 5 mm auf.

6. Verfahren zur Herstellung einer Batterie mit den folgenden Merkmalen:
a. es wird mindestens ein Elektrodenband (100) hergestellt, indem auf ein Kollektorband (110) einseitig oder beidseitig Elektrodenmaterial (120) aufgebracht wird, und
b. das auf dem Kollektorband (110) aufgebrachte Elektrodenmaterial (120) wird verdichtet, und
c. das Elektrodenband (100) oder ein Teilabschnitt des Elektrodenbandes (100) wird in ein Batteriegehäuse eingefügt, wobei das Kollektorband (110) galvanisch mit mindestens einem außenliegenden Ableiterbereich des Batteriegehäuses verbunden wird,
**gekennzeichnet durch** das folgende Merkmal:
d. die Verdichtung des Elektrodenmaterials (120) auf dem Kollektorband (110) erfolgt mittels des Verfahrens nach einem der Ansprüche 1 bis 5.

7. Verfahren nach Anspruch 6 mit mindestens einem der folgenden Merkmale:
a. die Aufbringung der Elektrodenmaterials (120) erfolgt in Form einer hochviskosen Elektroden paste, wobei nach Aufbringung der Elektrodenpaste und vor der Verdichtung ein Trocknungsschritt vorgesehen ist, und/oder
b. die Einbringung in das Batteriegehäuse erfolgt in Form eines Wickels, welcher durch Wickeln des Elektrodenbandes oder eines Teilabschnitts hiervon erzeugt wird, oder
c. die Einbringung in das Batteriegehäuse erfolgt in Form eines Stapels, welcher durch Ausschneiden von Teilabschnitten aus dem Elektrodenband und Stapelung derselben erzeugt wird.

8. Verdichtungsvorrichtung zum Verdichten von auf einem Kollektorband (110) aufgebrachtem Elektrodenmaterial (120) mit den folgenden Merkmalen:
a. die Verdichtungsvorrichtung dient dem Zweck, Elektrodenmaterial (120) zu verdichten, welches auf einem Kollektorband (110) aufgetragen ist und mit diesem zusammen ein Elektrodenband (100) bildet, wobei das Elektrodenmaterial (120) zumindest auf einer Seite auf das Kollektorband (110) aufgetragen ist und wobei auf dieser Seite mindestens ein streifenförmiger und in einer Längsrichtung erstreckter Freibereich (112) frei von Elektrodenmaterial (120) ist, und
b. die Verdichtungsvorrichtung verfügt über eine Förderstrecke zur Förderung des Elektrodenbandes (100) in Richtung einer zur Längsrichtung des Elektrodenbandes (100) parallelen Förderrichtung (2), und
c. die Verdichtungsvorrichtung verfügt über einen Verdichtungsspalt (20), durch den hindurch die Förderstrecke verläuft und der zumindest auf einer Seite von einer Verdichterwalze (22) begrenzt ist zur Verdichtung des Elektrodenmaterials (120) des durch den Verdichtungsspalt (20) hindurch laufenden Elektrodenbandes (100),
**gekennzeichnet durch** die folgenden Merkmale:
d. die Verdichtungsvorrichtung verfügt in Förderrichtung (2) vor dem Verdichtungsspalt (20) über eine Bremseinrichtung (40) und in Förderrichtung (2) hinter dem Verdichtungsspalt (20) über eine Fördereinrichtung (60), und
e. die Fördereinrichtung (60) weist mindestens eine selektiv auf den mindestens einen Freibereich wirkende Förderrolle (62) zum Antreiben des Elektrodenbandes (100) im mindestens einen Freibereich (112) auf und die Bremseinrichtung (40) weist eine selektiv auf den Freibereich wirkende Bremsrolle (62) auf und ist dafür ausgebildet, eine Bremskraft auf den Freibereich (112) wirken zu lassen, so dass die Fördereinrichtung (60) und die Bremseinrichtung (40) gemeinsam in der Lage sind, eine plastische Dehnung in Längsrichtung im Freibereich (112) zwischen ihnen zu erzeugen.

9. Verdichtungsvorrichtung nach Anspruch 8 mit dem folgenden zusätzlichen Merkmal:
a. die Bremseinrichtung (40) verfügt über mindestens eine Bremsrolle (42) zum Bremsen des Elektrodenbandes,
vorzugsweise mit mindestens einem der folgenden Merkmale:
b. der mindestens einen Bremsrolle (42) ist eine elektrische oder mechanische Bremse zugeordnet, oder
c. die mindestens eine Bremsrolle (42) ist mit einem Antriebsmotor versehen.

10. Verdichtungsvorrichtung nach Anspruch 9 mit mindestens einem der folgenden zusätzlichen Merkmale:
a. die Bremseinrichtung (40) verfügt über mindestens zwei Bremsrollen (42), die oberhalb und unterhalb des Freibereichs (112) angeordnet sind und die gegeneinander gerichtet auf den Freibereich (112) des Elektrodenbandes (100) drücken, wobei vorzugsweise die beiden Bremsrollen (42) mittels separater Antriebsmotoren (44A, 44B) angetrieben sind, und/oder
b. die Bremseinrichtung verfügt über mindestens zwei Bremsrollen (42) oberhalb oder unterhalb des Elektrodenbandes (100), die entsprechend zweier unterschiedlicher und zueinander paralleler Freibereiche (112) des Elektrodenbandes (100) positioniert sind, wobei vorzugsweise die beiden Bremsrollen (42) durch einen gemeinsamen Antriebsmotor oder durch separate Antriebsmotoren angetrieben sind, und/oder
c. die Bremsrollen (42) weisen eine in Kontakt mit dem Elektrodenband (100) gelangende Außenseite auf, die aus einem metallischen Werkstoff, aus Kunststoff, aus einem Keramikmaterial oder einem Elastomermaterial besteht oder aus einem Verbundmaterial aus einem metallischen Werkstoff, aus Kunststoff, aus einem Keramikmaterial oder einem Elastomermaterial.

11. Verdichtungsvorrichtung nach einem der Ansprüche 8 bis 10 mit mindestens einem der folgenden zusätzlichen Merkmale:
a. die Fördereinrichtung (60) verfügt über mindestens zwei Förderrollen (62), die oberhalb und unterhalb des Freibereichs (112) angeordnet sind und die gegeneinander gerichtet auf den Freibereich (112) des Elektrodenbandes (100) drücken, wobei vorzugsweise die beiden Förderrollen (62) mittels separater Antriebsmotoren (64A, 64B) angetrieben sind, und/oder
b. die Fördereinrichtung (60) verfügt über mindestens zwei Förderrollen (62) oberhalb oder unterhalb des Elektrodenbandes (100), die entsprechend zweier unterschiedlicher und zueinander paralleler Freibereiche (112) des Elektrodenbandes (100) positioniert sind, wobei vorzugsweise die beiden Förderrollen (62) durch einen gemeinsamen Antriebsmotor oder durch separate Antriebsmotoren angetrieben sind, und/oder
c. die Förderrollen (62) weisen eine in Kontakt mit dem Elektrodenband (100) gelangende Außenseite auf, die aus einem metallischen Werkstoff, aus Kunststoff, aus einem Keramikmaterial oder einem Elastomermaterial besteht oder aus einem Verbundmaterial aus einem metallischen Werkstoff, aus Kunststoff, aus einem Keramikmaterial oder einem Elastomermaterial.

12. Verdichtungsvorrichtung nach einem der Ansprüche 8 bis 11 mit dem folgenden zusätzlichen Merkmal:
a. es ist eine Heizeinrichtung (30) vorgesehen, die an der Bremseinrichtung (40), vor der Bremseinrichtung (40) oder zwischen der Bremseinrichtung (40) und der Fördereinrichtung (60) angeordnet ist und die geeignet ist, das Elektrodenband (100) zumindest in einem Freibereich (112) zu erwärmen,
vorzugsweise mit dem folgenden zusätzlichen Merkmal:
b. die Heizeinrichtung ist dafür ausgebildet, ein Teil der Bremseinrichtung und insbesondere eine Bremsrolle der Bremseinrichtung zu erwärmen, so dass hierdurch mittelbar das Kollektorband (110) im Freibereich (112) erwärmt wird.

13. Verdichtungsvorrichtung nach einem der Ansprüche 8 bis 12 mit dem folgenden zusätzlichen Merkmal:
a. es ist eine Erfassungs- und Steuereinrichtung (80) vorgesehen, die dafür ausgebildet ist, die Formgebung des Elektrodenbandes (100) zu erfassen und in Reaktion auf die erfasste Formgebung die Fördereinrichtung (60) und/oder die Bremseinrichtung (40) und/oder die Heizeinrichtung (30) zu steuern,
vorzugsweise mit dem zusätzlichen Merkmal:
b. die Erfassungs- und Steuereinrichtung (80) weist mindestens eine Kamera (82) zur Erfassung der Formgebung des Elektrodenbandes (100) auf.

14. Verdichtungsvorrichtung nach einem der Ansprüche 8 bis 13 mit dem folgenden weiteren Merkmal:
a. in die Verdichtungsvorrichtung ist ein Elektrodenband (100) eingelegt, welches ein Kollektorband (110) aus einem leitfähigen Material, insbesondere aus Aluminium oder Kupfer, aufweist und welches auf mindestens einer Seite mit einem Elektrodenmaterial (120) versehen ist, wobei das Elektrodenmaterial (120) zumindest auf einer Seite auf das Kollektorband (110) aufgetragen ist und wobei auf dieser Seite mindestens ein streifenförmiger und in einer Längsrichtung erstreckter Freibereich (112) frei von Elektrodenmaterial (120) ist.

15. Verdichtungsvorrichtung nach einem der Ansprüche 8 bis 14 mit mindestens einem der folgenden weiteren Merkmale:
a. die Förderrolle (62) und/oder die Bremsrolle (42) ist bezogen auf eine zur Förderrichtung (2) orthogonale Querrichtung gegenüber dem Verdichtungsspalt (20) verlagerbar und/oder es sind Förderrollen (62) und/oder Bremsrollen (42) vorgesehen, die fallweise anbringbar sind, um eine Anpassung der der Verdichtungsvorrichtung auf unterschiedliche Konfigurationen von Freibereichen (112) des Elektrodenbandes (100) zu ermöglichen, und/oder
b. der Verdichtungsspalt (20) wird durch zwei Verdichterwalzen (22) definiert, von denen eine unterhalb und eine oberhalb der Förderstrecke angeordnet ist.

## Claims

1. Method for compressing electrode material (120) applied to a collector tape (110), with the following features:
a. the method serves the purpose of compressing electrode material (120) which has been applied to a collector tape (110) and together with it forms an electrode tape (100), wherein the electrode material (120) has been applied to the collector tape at least on one side and wherein on this side at least one free area (112) which is in the form of a strip and extends in a longitudinal direction of the collector tape is free from electrode material (120), and
b. the electrode tape is guided in a conveying direction (2), which is parallel to the longitudinal direction of the electrode tape, through a compression gap (20), which brings about a compression of the electrode material (120), and
c. force is applied in the longitudinal direction to the at least one free area (112) in order in this way to bring about a stretching of the collector tape in the free area,
**characterized by** the following feature:
d. the stretching of the collector tape (110) in the at least one free area (112) in the longitudinal direction takes place by force being applied to the collector tape downstream of the compression gap (20) in the conveying direction (2) by means of at least one conveying roller (62), selectively acting on the free area, and the collector tape simultaneously being restrained upstream of the compression gap (20) in the conveying direction by at least one braking roller (42) of a braking device (40), selectively acting on the free area (112), such that the collector tape (110) is subjected to tensile stress in the free area (112) between the braking device (40) and the conveying device (50) and a plastic strain in the longitudinal direction is thereby brought about in the free area (112).

2. Method according to Claim 1, with the following additional feature:
a. the stress in the collector tape (110) that is brought about by the braking device and the conveying device in the free area between the braking device (40) and the conveying device (50) in the conveying direction (2) is at least 40 MPa,
preferably with the additional feature:
b. the stress in the collector tape (110) that is brought about by the braking device and the conveying device in the free area between the braking device (40) and the conveying device (50) in the conveying direction (2) is at least 20% higher than the state of stress in the conveying direction (2) in the area of the collector tape (110) that is coated with electrode material.

3. Method according to Claim 1 or 2, with at least one of the following additional features:
a. the porosity of the electrode material (120) is reduced by the compression gap (20), preferably from more than 40% upstream of the compression gap (20) to less than 40% downstream of the compression gap (20), and/or
b. the electrode tape (100) is conveyed through the compression gap (20) at a speed of more than 1 m/min and/or at a speed of less than 100 m/min, preferably at a speed between 10 m/min and 50 m/min.

4. Method according to one of Claims 1 to 3, with the following additional feature:
a. the electrode tape (100) is at least partially heated by means of a heating device (30) upstream of the braking device (40) and/or between the braking device (40) and the conveying device (50), preferably to a temperature between 20°C and 200°C, particularly preferably to a temperature greater than 30°C and/or a temperature less than 120°C,
preferably with the following additional feature:
b. the heating device is designed for heating part of the braking device, and in particular a braking roller of the braking device, such that the collector tape (110) is thereby indirectly heated in the free area (112).

5. Method according to one of Claims 1 to 4, with at least one of the following additional features:
a. the collector tape (110) is formed as a metal collector tape (110), and/or
b. the electrode material (120) takes the form of a layer with electrochemically active particles, which preferably additionally comprises at least one electrode binder and/or a conductive additive, in particular carbon black, graphite or carbon nanotubes, and/or
c. the at least one free area (112) forms a peripheral free area (112) at one of the side edges of the collector tape (110), wherein a peripheral free area (112) is preferably provided at both side edges of the collector tape (110), and/or
d. the collector tape (110) is formed as a collector tape of aluminium or an aluminium alloy and preferably has a starting thickness of 8 µm to 12 µm, or
e. the collector tape (110) is formed as a collector tape of copper or nickel or a copper alloy or a nickel alloy and preferably has a starting thickness of 3 µm to 5 µm, or
f. the collector tape (110) has a width between 50 mm and 2400 mm, and/or
g. the at least one free area (112) has a width in the transverse direction of at least 5 mm.

6. Method for producing a battery, with the following features:
a. at least one electrode tape (100) is produced by electrode material (120) being applied to one or both sides of a collector tape (110), and
b. the electrode material (120) applied to the collector tape (110) is compressed, and
c. the electrode tape (100) or a subportion of the electrode tape (100) is inserted into a battery housing, wherein the collector tape (110) is galvanically connected to at least one outer collector area of the battery housing,
**characterized by** the following feature:
d. the compression of the electrode material (120) on the collector tape (110) takes place by means of the method according to one of Claims 1 to 5.

7. Method according to Claim 6, with at least one of the following features:
a. the application of the electrode material (120) takes place in the form of a highly viscous electrode paste, wherein a drying step is provided after application of the electrode paste and before the compression, and/or
b. the electrode tape is introduced into the battery housing in the form of a coil which is produced by winding it or a subportion of it, or
c. the electrode tape is introduced into the battery housing in the form of a stack which is produced by cutting out subportions from it and stacking them.

8. Compression device for compressing electrode material (120) applied to a collector tape (110), with the following features:
a. the compression device serves the purpose of compressing electrode material (120) which has been applied to a collector tape (110) and together with it forms an electrode tape (100), wherein the electrode material (120) has been applied to the collector tape (110) at least on one side and wherein on this side at least one free area (112) which is in the form of a strip and extends in a longitudinal direction is free from electrode material (120), and
b. the compression device has a conveying section for conveying the electrode tape (100) in the direction of a conveying direction (2) parallel to the longitudinal direction of the electrode tape (100), and
c. the compression device has a compression gap (20), through which the conveying section runs and which is bounded at least on one side by a compressor roller (22) for the compression of the electrode material (120) of the electrode tape (100) running through the compression gap (20),
**characterized by** the following features:
d. the compression device has a braking device (40) upstream of the compression gap (20) in the conveying direction (2) and a conveying device (60) downstream of the compression gap (20) in the conveying direction (2), and
e. the conveying device (60) has at least one conveying roller (62), which selectively acts on the at least one free area and is intended for driving the electrode tape (100) in the at least one free area (112), and the braking device (40) has a braking roller (62), which selectively acts on the free area and is designed for making a braking force act on the free area (112), such that the conveying device (60) and the braking device (40) are together capable of producing between them a plastic strain in the longitudinal direction in the free area (112).

9. Compression device according to Claim 8, with the following additional feature:
a. the braking device (40) has at least one braking roller (42) for braking the electrode tape,
preferably with at least one of the following features:
b. the at least one braking roller (42) is assigned an electrical or mechanical brake, or
c. the at least one braking roller (42) is provided with a drive motor.

10. Compression device according to Claim 9, with at least one of the following additional features:
a. the braking device (40) has at least two braking rollers (42), which are arranged above and below the free area (112) and, directed towards one another, press onto the free area (112) of the electrode tape (100), wherein the two braking rollers (42) are preferably driven by means of separate drive motors (44A, 44B), and/or
b. the braking device has at least two braking rollers (42) above or below the electrode tape (100), which are positioned to correspond to two different, mutually parallel free areas (112) of the electrode tape (100), wherein the two braking rollers (42) are preferably driven by a common drive motor or by separate drive motors, and/or
c. the braking rollers (42) have an outer side which comes into contact with the electrode tape (100) and consists of a metal material, of plastic, of a ceramic material or an elastomer material or is of a composite material comprising a metal material, plastic, a ceramic material or an elastomer material.

11. Compression device according to one of Claims 8 to 10, with at least one of the following additional features:
a. the conveying device (60) has at least two conveying rollers (62), which are arranged above and below the free area (112) and, directed towards one another, press onto the free area (112) of the electrode tape (100), wherein the two conveying rollers (62) are preferably driven by means of separate drive motors (64A, 64B), and/or
b. the conveying device (60) has at least two conveying rollers (62) above or below the electrode tape (100), which are positioned to correspond to two different, mutually parallel free areas (112) of the electrode tape (100), wherein the two conveying rollers (62) are preferably driven by a common drive motor or by separate drive motors, and/or
c. the conveying rollers (62) have an outer side which comes into contact with the electrode tape (100) and consists of a metal material, of plastic, of a ceramic material or an elastomer material or is of a composite material comprising a metal material, plastic, a ceramic material or an elastomer material.

12. Compression device according to one of Claims 8 to 11, with the following additional feature:
a. a heating device (30) is provided, arranged on the braking device (40), upstream of the braking device (40) or between the braking device (40) and the conveying device (60) and suitable for heating the electrode tape (100) at least in a free area (112),
preferably with the following additional feature:
b. the heating device is designed for heating part of the braking device, and in particular a braking roller of the braking device, such that the collector tape (110) is thereby indirectly heated in the free area (112).

13. Compression device according to one of Claims 8 to 12, with the following additional feature:
a. a detection and control device (80) is provided, designed for detecting the shaping of the electrode tape (100) and, in response to the detected shaping, controlling the conveying device (60) and/or the braking device (40) and/or the heating device (30),
preferably with the additional feature:
b. the detection and control device (80) has at least one camera (82) for detecting the shaping of the electrode tape (100).

14. Compression device according to one of Claims 8 to 13, with the following further feature:
a. placed in the compression device is an electrode tape (100), which has a collector tape (110) of a conductive material, in particular of aluminium or copper, and which is provided on at least one side with an electrode material (120), wherein the electrode material (120) has been applied to the collector tape (110) at least on one side and wherein on this side at least one free area (112) which is in the form of a strip and extends in a longitudinal direction is free from electrode material (120).

15. Compression device according to one of Claims 8 to 14, with at least one of the following further features: a. the conveying roller (62) and/or the braking roller (42) is displaceable with respect to the compression gap (20) in relation to a transverse direction orthogonal to the conveying direction (2) and/or conveying rollers (62) and/or braking rollers (42) are provided, placeable on a case-by-case basis to allow an adaptation of the compression device to different configurations of free areas (112) of the electrode tape (100), and/or b. the compression gap (20) is defined by two compressor rollers (22), one of which is arranged below and one above the conveying section.

## Revendications

1. Procédé de compression d'un matériau d'électrode (120) appliqué sur une bande collectrice (110), présentant les caractéristiques suivantes :
a. le procédé a pour but de comprimer un matériau d'électrode (120) qui est appliqué sur une bande collectrice (110) et qui forme avec celle-ci une bande électrode (100), le matériau d'électrode (120) étant appliqué sur la bande collectrice au moins sur une face, et, sur cette face, au moins une zone libre (112) en forme de bande et s'étendant dans une direction longitudinale de la bande collectrice étant exempte de matériau d'électrode (120), et
b. la bande électrode est guidée dans une direction de transport (2) parallèle à la direction longitudinale de la bande électrode à travers un espace de compression (20), qui provoque une compression du matériau d'électrode (120), et
c. ladite au moins une zone libre (112) est soumise à une force dans la direction longitudinale, afin de provoquer ainsi un allongement de la bande collectrice dans la zone libre,
**caractérisé par** la caractéristique suivante :
d. l'allongement de la bande collectrice (110) dans ladite au moins une zone libre (112) dans la direction longitudinale s'effectue par le fait que la bande collectrice est sollicitée par une force dans la direction de transport (2) derrière l'espace de compression (20) au moyen d'au moins un rouleau de transport (62) agissant de manière sélective sur la zone libre et est simultanément retenue dans la direction de transport avant l'espace de compression (20) par au moins un rouleau de freinage (42) d'un dispositif de freinage (40) agissant de manière sélective sur la zone libre (112), de sorte que la bande collectrice (110) est, dans la zone libre, soumise à une contrainte de traction (112) entre le dispositif de freinage (40) et le dispositif de transport (50), ce qui provoque un allongement plastique dans la zone libre (112) dans la direction longitudinale.

2. Procédé selon la revendication 1, avec la caractéristique supplémentaire suivante :
a. la tension dans la bande collectrice (110) provoquée dans la zone libre par le dispositif de freinage et le dispositif de transport entre le dispositif de freinage (40) et le dispositif de transport (50) dans la direction de transport (2) est d'au moins 40 MPa,
de préférence avec la caractéristique supplémentaire suivante :
b. la tension dans la bande collectrice (110) provoquée dans la zone libre par le dispositif de freinage et le dispositif de transport entre le dispositif de freinage (40) et le dispositif de transport (50) dans la direction de transport (2) est supérieure d'au moins 20 % à l'état de tension dans la direction de transport (2) dans la zone de la bande collectrice (110) revêtue de matériau d'électrode.

3. Procédé selon la revendication 1 ou la revendication 2 avec au moins une des caractéristiques supplémentaires suivantes :
a. la porosité du matériau d'électrode (120) est réduite par l'espace de compression (20), de préférence de plus de 40 % en amont de l'espace de compression (20) à moins de 40 % en aval de l'espace de compression (20), et/ou
b. la bande électrode (100) est transportée à travers l'espace de compression (20) à une vitesse supérieure à 1 m/min et/ou à une vitesse inférieure à 100 m/min, de préférence à une vitesse comprise entre 10 m/min et 50 m/min.

4. Procédé selon l'une des revendications 1 à 3 avec la caractéristique supplémentaire suivante :
a. la bande électrode (100) est chauffée au moins partiellement avant le dispositif de freinage (40) et/ou entre le dispositif de freinage (40) et le dispositif de transport (50) au moyen d'un dispositif de chauffage (30), de préférence à une température comprise entre 20 °C et 200 °C, en particulier de préférence à une température supérieure à 30 °C et/ou à une température inférieure à 120 °C,
de préférence avec la caractéristique supplémentaire suivante :
b. le dispositif de chauffage est conçu pour chauffer une partie du dispositif de freinage et en particulier un rouleau de freinage du dispositif de freinage, de sorte que la bande collectrice (110) est ainsi indirectement chauffée dans la zone libre (112).

5. Procédé selon l'une des revendications 1 à 4 avec au moins l'une des caractéristiques supplémentaires suivantes :
a. la bande collectrice (110) est conçue comme une bande collectrice métallique (110), et/ou
b. le matériau d'électrode (120) se présente sous la forme d'une couche avec des particules électrochimiquement actives, qui comprend de préférence en plus au moins un liant d'électrode et/ou un additif conducteur, en particulier du noir de carbone, du graphite ou des nanotubes de carbone, et/ou
c. ladite au moins une zone libre (112) forme une zone libre (112) du côté du bord sur l'un des bords latéraux de la bande collectrice (110), une zone libre (112) du côté du bord étant de préférence prévue sur les deux bords latéraux de la bande collectrice (110), et/ou
d. la bande collectrice (110) est conçue sous la forme d'une bande collectrice en aluminium ou en alliage d'aluminium et présente de préférence une épaisseur initiale allant de 8 µm à 12 µm, ou
e. la bande collectrice (110) est réalisée sous forme de bande collectrice en cuivre ou en nickel ou en un alliage de cuivre ou en un alliage de nickel et présente de préférence une épaisseur initiale allant de 3 µm à 5 µm, ou
f. la bande collectrice (110) présente une largeur comprise entre 50 mm et 2400 mm, et/ou
g. ladite au moins une zone libre (112) présente une largeur dans la direction transversale d'au moins 5 mm.

6. Procédé de fabrication d'une batterie présentant les caractéristiques suivantes :
a. il est fabriqué au moins une bande électrode (100) en appliquant un matériau d'électrode (120) sur une face ou sur les deux faces d'une bande collectrice (110), et
b. le matériau d'électrode (120) appliqué sur la bande collectrice (110) est comprimé, et
c. la bande électrode (100) ou une section partielle de la bande électrode (100) est insérée dans un boîtier de batterie, la bande collectrice (110) étant reliée galvaniquement à au moins une zone conductrice externe du boîtier de batterie,
**caractérisé par** la caractéristique suivante :
d. la compression du matériau d'électrode (120) sur la bande collectrice (110) est réalisée au moyen du procédé selon l'une des revendications 1 à 5.

7. Procédé selon la revendication 6, présentant au moins l'une des caractéristiques suivantes :
a. l'application du matériau d'électrode (120) est réalisée sous la forme d'une pâte d'électrode à haute viscosité, une étape de séchage étant prévue après l'application de la pâte d'électrode et avant la compression, et/ou
b. l'introduction dans le boîtier de la batterie s'effectue sous la forme d'un enroulement, qui est produit par enroulement de la bande électrode ou d'une section de celle-ci, ou
c. l'introduction dans le boîtier de la batterie s'effectue sous la forme d'un empilement, qui est produit en découpant des sections partielles de la bande électrode et en les empilant.

8. Dispositif de compression pour comprimer le matériau d'électrode (120) appliqué sur une bande collectrice (110), présentant les caractéristiques suivantes :
a. le dispositif de compression sert à comprimer le matériau d'électrode (120) qui est appliqué sur une bande collectrice (110) et forme avec celle-ci une bande électrode (100), le matériau d'électrode (120) étant appliqué au moins sur une face de la bande collectrice (110) et, sur cette face, au moins une zone libre (112) en forme de bande et s'étendant dans une direction longitudinale étant exempte de matériau d'électrode (120), et
b. le dispositif de compression comporte une trajectoire de transport pour transporter la bande électrode (100) dans une direction de transport (2) parallèle à la direction longitudinale de la bande électrode (100), et
c. le dispositif de compression comporte un espace de compression (20) à travers laquelle s'étend la trajectoire de transport et qui est délimitée au moins sur un côté par un rouleau de compression (22) pour la compression du matériau d'électrode (120) de la bande électrode (100) passant à travers l'espace de compression (20),
**caractérisé par** les caractéristiques suivantes :
d. le dispositif de compression dispose, dans la direction de transport (2), en amont de l'espace de compression (20), d'un dispositif de freinage (40) et en aval de l'espace de compression (20) dans la direction de transport (2), d'un dispositif de transport (60), et
e. le dispositif de transport (60) présente au moins un rouleau de transport (62) agissant sélectivement sur ladite au moins une zone libre pour entraîner la bande électrode (100) dans ladite au moins une zone libre (112), et le dispositif de freinage (40) présente un rouleau de freinage (62) agissant sélectivement sur la zone libre et étant conçu pour permettre à une force de freinage d'agir sur la zone libre (112), de sorte que le dispositif de transport (60) et le dispositif de freinage (40) sont conjointement en mesure de produire un allongement plastique dans la direction longitudinale dans la zone libre (112) entre eux.

9. Dispositif de compression selon la revendication 8 avec la caractéristique supplémentaire suivante :
a. le dispositif de freinage (40) comporte au moins un rouleau de freinage (42) pour freiner la bande électrode, de préférence avec au moins une des caractéristiques suivantes :
b. un frein électrique ou mécanique est associé audit au moins un rouleau de freinage (42), ou
c. ledit au moins un rouleau de freinage (42) est pourvu d'un moteur d'entraînement.

10. Dispositif de compression selon la revendication 9, avec au moins une des caractéristiques supplémentaires suivantes :
a. le dispositif de freinage (40) comporte au moins deux rouleaux de freinage (42) qui sont agencés au-dessus et au-dessous de la zone libre (112) et qui exercent une pression dirigée l'un vers l'autre sur la zone libre (112) de la bande électrode (100), les deux rouleaux de freinage (42) étant de préférence entraînés au moyen de moteurs d'entraînement séparés (44A, 44B), et/ou
b. le dispositif de freinage comporte au moins deux rouleaux de freinage (42) au-dessus ou au-dessous de la bande électrode (100), qui sont positionnés en correspondance de deux zones libres (112) différentes et parallèles entre elles de la bande électrode (100), les deux rouleaux de freinage (42) étant de préférence entraînés par un moteur d'entraînement commun ou par des moteurs d'entraînement séparés, et/ou
c. les rouleaux de freinage (42) présentent une face extérieure entrant en contact avec la bande électrode (100), qui est constituée d'un matériau métallique, d'un matériau plastique, d'un matériau céramique ou d'un matériau élastomère ou d'un matériau composite constitué d'un matériau métallique, d'un matériau plastique, d'un matériau céramique ou d'un matériau élastomère.

11. Dispositif de compression selon l'une des revendications 8 à 10, présentant au moins l'une des caractéristiques additionnelles suivantes :
a. le dispositif de transport (60) comporte au moins deux rouleaux de transport (62) qui sont agencés au-dessus et au-dessous de la zone libre (112) et qui exercent une pression sur la zone libre (112) de la bande électrode (100) en étant orientés l'un vers l'autre, les deux rouleaux de transport (62) étant de préférence entraînés au moyen de moteurs d'entraînement (64A, 64B) séparés, et/ou
b. le dispositif de transport (60) comporte au moins deux rouleaux de transport (62) au-dessus ou au-dessous de la bande électrode (100), qui sont positionnés en correspondance de deux zones libres (112) différentes et parallèles entre elles de la bande électrode (100), les deux rouleaux de transport (62) étant de préférence entraînés par un moteur d'entraînement commun ou par des moteurs d'entraînement séparés, et/ou
c. les rouleaux de transport (62) présentent une face extérieure qui vient en contact avec la bande électrode (100) et qui est constituée d'un matériau métallique, d'un matériau plastique, d'un matériau céramique ou d'un matériau élastomère ou d'un matériau composite constitué d'un matériau métallique, d'un matériau plastique, d'un matériau céramique ou d'un matériau élastomère.

12. Dispositif de compression selon l'une des revendications 8 à 11, présentant la caractéristique supplémentaire suivante :
a. il est prévu un dispositif de chauffage (30), qui est agencé sur le dispositif de freinage (40), devant le dispositif de freinage (40) ou entre le dispositif de freinage (40) et le dispositif de transport (60) et qui est apte à chauffer la bande électrode (100) au moins dans une zone libre (112),
de préférence avec la caractéristique supplémentaire suivante :
b. le dispositif de chauffage est conçu pour chauffer une partie du dispositif de freinage et en particulier un rouleau de freinage du dispositif de freinage, de sorte que la bande collectrice (110) est ainsi indirectement chauffée dans la zone libre (112).

13. Dispositif de compression selon l'une des revendications 8 à 12, présentant la caractéristique supplémentaire suivante :
a. il est prévu un dispositif de détection et de commande (80), qui est conçu pour détecter la mise en forme de la bande électrode (100) et pour commander le dispositif de transport (60) et/ou le dispositif de freinage (40) et/ou le dispositif de chauffage (30) en réaction à la mise en forme détectée,
de préférence avec la caractéristique supplémentaire suivante :
b. le dispositif de détection et de commande (80) présente au moins une caméra (82) pour détecter le façonnage de la bande électrode (100).

14. Dispositif de compression selon l'une des revendications 8 à 13 avec la caractéristique supplémentaire suivante :
a. une bande électrode (100) est insérée dans le dispositif de compression, laquelle présente une bande collectrice (110) en un matériau conducteur, en particulier en aluminium ou en cuivre, et laquelle est pourvue d'un matériau d'électrode (120) sur au moins une face, le matériau d'électrode (120) étant appliqué sur la bande collectrice (110) au moins sur une face, et, sur cette face, au moins une zone libre (112) en forme de bande et s'étendant dans une direction longitudinale étant exempte de matériau d'électrode (120).

15. Dispositif de compression selon l'une des revendications 8 à 14, présentant au moins l'une des caractéristiques supplémentaires suivantes :
a. le rouleau de transport (62) et/ou le rouleau de freinage (42) est déplaçable par rapport à l'espace de compression (20) par rapport à une direction transversale orthogonale à la direction de transport (2) et/ou il est prévu des rouleaux de transport (62) et/ou des rouleaux de freinage (42) qui sont aptes à être montés au cas par cas afin de permettre une adaptation du dispositif de compression à différentes configurations de zones libres (112) de la bande électrode (100), et/ou
b. l'espace de compression (20) est défini par deux rouleaux de compression (22), dont l'un est agencé en dessous et l'autre au-dessus de la trajectoire de transport.
